Europäisches Patentamt

European Patent Office

Office européen des brevets

(11) Publication number: **0 502 604 A1**

## EUROPEAN PATENT APPLICATION

(21) Application number: **92300541.7**

(22) Date of filing: **22.01.92**

(51) Int. Cl.5: **F16D  1/09**

(30) Priority: **07.03.91 GB 9104791**

(43) Date of publication of application:
**09.09.92 Bulletin  92/37**

(84) Designated Contracting States:
**DE ES FR GB IT**

(71) Applicant: **LUCAS INDUSTRIES PUBLIC LIMITED COMPANY**
**Brueton House, New Road**
**Solihull, West Midlands B91 3TX(GB)**

(72) Inventor: **Nicol, Stuart William**
**12 Chester Court, Monks Drive**
**Acton, London W3 0EF(GB)**

(74) Representative: **Thompson, George Michael et al**
**MARKS & CLERK Alpha Tower Suffolk Street Oueensway**
**Birmingham B1 1TT(GB)**

(54) **Taper connection.**

(57) A taper connection between a hub (13) and a shaft (10) has a tapered section (11) on the shaft and a tapered bore (14) in the hub which are engaged with each other. In order to locate the hub and shaft angularly the hub is provided with an annular collar (15) and the collar carries a pin (18) which extends into a slot (19) formed in the shaft.

EP 0 502 604 A1

This invention relates to a taper connection for effecting a torque transmitting coupling between a hub and a shaft.

The conventional form of connection comprises a taper on the shaft, a complementarily tapered bore in the hub and a means for example a nut, carried by a threaded portion of the shaft for forcing the hub into wedging engagement with the shaft. In order to ensure a specific angular relationship between the hub and the shaft it is common practice to provide a key on the tapered portion of the shaft and which locates in a slot formed in the tapered bore in the hub. The key is only provided to angularly locate the hub on the shaft and not to transmit torque therebetween.

The torque carrying capacity of the connection varies in proportion to the axial force which is applied between the hub and the shaft. However, the axial force which can be applied is limited by the fact that the key way in the hub has the effect of concentrating the hoop stress in the hub and the limited axial force which can be applied before deformation or cracking of the hub takes place, results in a torque transmitting capability well below the torque carrying capability of the shaft. It is possible to provide the tapered portion of the shaft on an enlarged portion of the shaft but this is not always practical for assembly purposes.

The object of the present invention is to provide a taper connection for the purpose specified in a simple and convenient form.

According to the invention a taper connection for effecting a torque transmitting coupling between a hub and a shaft comprises a tapered section defined on the shaft, a tapered bore formed in the hub and which is located about the tapered section of the shaft, an annular collar formed on or secured to the hub, the bore in the collar being shaped so that there is no interference with the shaft as the hub and shaft are moved axially relative to each other, a pin and slot connection defined on the collar and shaft for aligning the hub and shaft in the correct angular relationship and means for urging the hub and shaft axially relative to each other to engage the tapered bore of the hub with the tapered section of the shaft.

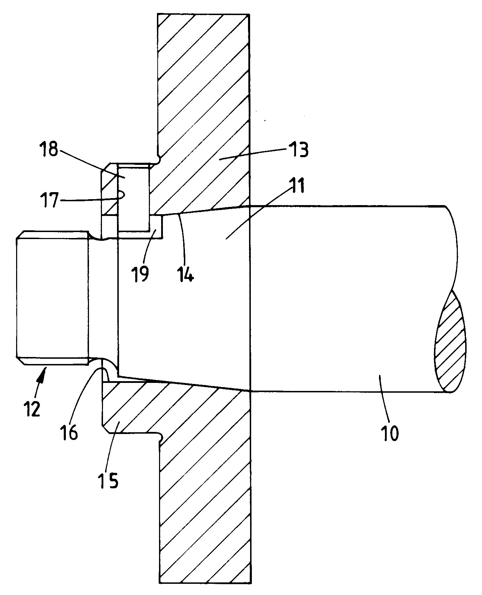

An example of a taper connection in accordance with the invention is shown in sectional side elevation in the accompanying drawing. The shaft is indicated at 10 and has a tapered section 11 and a screw threaded portion 12 located at the end of the shaft. The hub 13 is provided with a complementarily tapered bore 14 and formed integrally with the hub is an annular collar 15 which is formed with a cylindrical bore 16.

The collar is provided with a radial drilling 17 in which is located a pin 18 and the pin locates to ensure the correct angular relationship between the shaft and the hub, in an axial slot 19 formed in the shaft. In order to urge the hub axially on the shaft to engage the tapered surface of the bore with the tapered portion 11 of the shaft, a nut (not shown) is engaged with the threaded portion 12 of the shaft.

By the arrangement described the hoop stress which is generated when the nut is tightened, is uniform about the hub so that an increased axial force can be generated between the hub and the shaft as compared with the arrangement in which the tapered portion of the bore in the hub is provided with a slot.

The collar can provide a location for a gear wheel mounted on the hub or the hub itself may be part of a gear wheel. The arrangement as described is particularly useful for the driving connection to a fuel injection pumping apparatus for an internal combustion engine, the shaft forming the drive shaft of the apparatus.

## Claims

1. A taper connection for effecting a torque transmitting coupling between a hub (13) and a shaft (10) comprising a tapered section (11) defined on the shaft, a tapered bore (14) formed in the hub (13) and which is located about the tapered section on the shaft, means for urging the hub and shaft axially relative to each other to engage the tapered bore in the hub with the tapered section of the shaft and locating means for locating the hub and the shaft in the correct angular relationship, characterised in that said locating means comprises an annular collar (15) formed on or secured to the hub, the bore (16) in the collar being such that there is no interference with the shaft as the hub and shaft are moved relative to each other, and a pin and slot connection (18, 19) defined on the collar and shaft for locating the hub and shaft in the correct angular relationship.

2. A taper connection according to Claim 1, characterised in that the pin (18) is located in a radial drilling (17) formed in the collar (15).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 164 950 (DAILEY PETROLEUM) <br> * the whole document * | 1,2 | F16D1/09 |
| Y | US-A-4 011 019 (MCDONALD) <br> * the whole document * | 1,2 | |
| A | US-A-3 355 201 (BARWICK) <br> * the whole document * | 1,2 | |
| A | US-A-3 061 342 (FELLER) <br> * the whole document * | 1 | |

TECHNICAL FIELDS SEARCHED (Int. Cl.5 )

F16D

The present search report has been drawn up for all claims

| Place of search | Date of completion of the search | Examiner |
|---|---|---|
| THE HAGUE | 07 MAY 1992 | BALDWIN D. R. |

EPO FORM 1503 03.82 (P0401)